# EUROPEAN PATENT APPLICATION

(11) **EP 2 701 048 A1**
(43) Date of publication of application: **26.02.2014**
(21) Application number: 12860936.9
(22) Date of filing: 06.12.2012
(51) Int. Cl.: G06F 3/0483

(54) **METHOD AND DEVICE FOR SOFTWARE INTERFACE DISPLAY ON TERMINAL, AND COMPUTER STORAGE MEDIUM**

(30) Priority: 19.12.2011 CN 201110427317
(71) Applicant: Tencent Technology (Shenzhen) Company Limited, Guangdong 518044 (CN)
(72) Inventor: LUAN, Lan, Shenzhen-City Guangdong 518044 (CN); CHEN, Zhan, Shenzhen-City Guangdong 518044 (CN)
(74) Representative: Gunzelmann, Rainer
(86) International application number: PCT/CN2012/086073
(87) International publication number: WO 2013/091483

(57) **Abstract**

A method and device for software interface display on a terminal is described. The method includes that: a terminal acquires an interface dragging instruction, and records a dragging distance corresponding to the interface dragging instruction; and performs coordinate transformation on each pixel of a screenshot of an interface displayed on a current window according to the dragging distance and a preset rule for coordinate transformation, and redisplays the screenshot of each interface according to a result of the coordinate transformation, achieving the 3D effect or simulated 3D visual effect. The device includes a dragging instruction processing module and a coordinate transformation module, wherein the dragging instruction processing module is configured to acquire an interface dragging instruction, and record a dragging distance corresponding to the interface dragging instruction; and the coordinate transformation module is configured to perform coordinate transformation on each pixel of a screenshot of an interface displayed on a current window according to the dragging distance and a preset rule for coordinate transformation, and redisplay the screenshot of each interface according to a result of the coordinate transformation, achieving the 3D effect or simulated 3D visual effect. With the present method and device, it is possible to implement software interface display in 3D on a terminal.

## Description

### TECHNICAL FIELD

The present disclosure generally relates to the field of software interface display on a terminal, and in particular to a method and device for software interface display on a terminal and a computer storage medium.

### BACKGROUND

Most software interfaces at present are displayed in a 1D (one-dimensional) or 2D (two-dimensional) mode. In the case of 1D display, when a certain function is opened, the new interface is displayed by overlapping another layer; with such a displaying mode, just one interface (function) can be opened at one time, which increases the cost for function switching. In the case of 2D display, when a user triggers a certain hotspot, content of the background is displayed by a flip.

Both the 1D display mode and the 2D display mode are limited to display a software interface with a simple information structure, which is disadvantageous for software function expansion.

### SUMMARY

The embodiments of the present disclosure provide a method and device for software interface display on a terminal and a computer storage medium, so as to implement software interface display in 3D on a terminal.

According to an aspect of the present disclosure, a method for software interface display on a terminal is provided, including:
a terminal acquires an interface dragging instruction, and records a dragging distance corresponding to the interface dragging instruction; and
the terminal performs coordinate transformation on each pixel of a screenshot of an interface displayed on a current window of the terminal according to the dragging distance and a preset rule for coordinate transformation, and redisplays the screenshot of each interface according to a result of the coordinate transformation, so as to achieving 3D effect or simulated 3D visual effect of the display.

According to another aspect of the present disclosure, a device for software interface display on a terminal is provided, and includes a dragging instruction processing module and a coordinate transformation module,
wherein the dragging instruction processing module is configured to acquire an interface dragging instruction, and record a dragging distance corresponding to the interface dragging instruction; and
wherein the coordinate transformation module is configured to perform coordinate transformation on each pixel of a screenshot of an interface displayed on a current window of the terminal according to the dragging distance and a preset rule for coordinate transformation, and redisplay the screenshot of each interface according to a result of the coordinate transformation, so as to achieve 3D effect or simulated 3D visual effect of the display.

The present disclosure further provides a computer storage medium in which computer-executable instructions are stored, the computer-executable instructions being used for executing the method for software interface display on a terminal according to the disclosure.

With the method and device for software interface display on a terminal and the computer storage medium provided by the embodiments of the present disclosure, an interface dragging instruction is acquired first, and a dragging distance corresponding to the interface dragging instruction is recorded; then, coordinate transformation is performed on each pixel of a screenshot of an interface displayed on a current window according to the dragging distance and a preset rule for coordinate transformation, and the screenshot of each interface is redisplayed according to a result of the coordinate transformation, so that 3D effect or simulated 3D visual effect may be archived. With the embodiments of the present disclosure, expansion is made on a software structure, thus realizing software interface display in 3D on a terminal, which not only meets a demand for richer terminal functionality, but also enhances users' operational experience.

### BRIEF DESCRIPTION OF THE DRAWINGS

Fig.1 is a flowchart of a method for software interface display on a terminal according to an embodiment of the present disclosure.
Fig.2 is a schematic diagram of 3D effect in software interface display on a terminal in an embodiment of the present disclosure.
Fig.3 is a schematic diagram of a structure of a device for software interface display on a terminal according to an embodiment of the present disclosure.
Fig.4 is a schematic diagram of a structure of another device for software interface display on a terminal according to an embodiment of the present disclosure.

### DETAILED DESCRIPTION

A technical solution of the present disclosure is further elaborated below with reference to the drawings and specific embodiments.

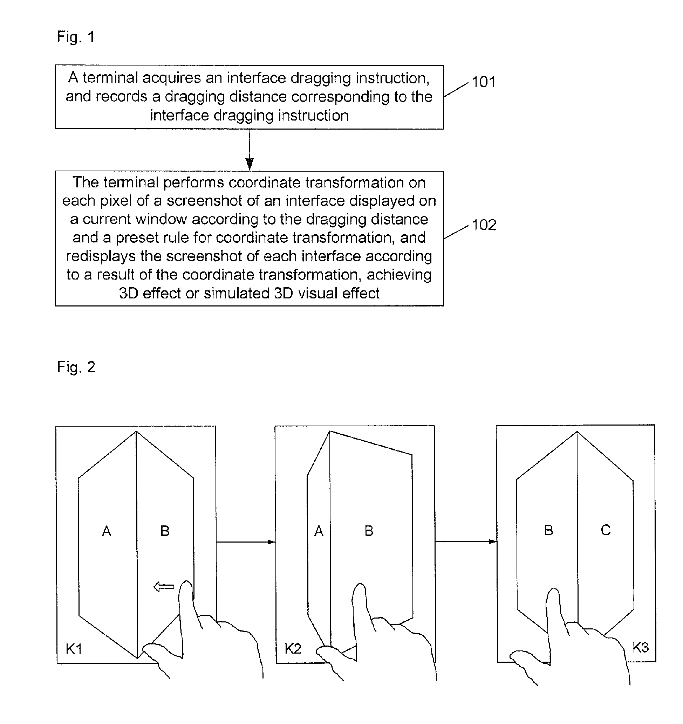

Fig. 1 shows a method for software interface display on a terminal provided by an embodiment of the present disclosure, mainly includes the follows steps.

In step 101, a terminal acquires an interface dragging instruction, and records a dragging distance corresponding to the interface dragging instruction.

Once a user executes a dragging operation on the screen of a touch-screen terminal, or clicks on a current display interface through a mouse and executes a mouse dragging operation on a non-touch-screen terminal, the interface dragging instruction will be triggered, with which the terminal acquires the interface dragging instruction, and records a dragging distance corresponding to the interface dragging instruction.

In step 102, the terminal performs coordinate transformation on each pixel of a screenshot of an interface displayed on a current window according to the dragging distance and a preset rule for coordinate transformation, and redisplays the screenshot of each interface according to a result of the coordinate transformation, achieving 3D effect or simulated 3D visual effect.

The rule for coordinate transformation is for example preset based on dragging distances within the terminal. After recording the dragging distance, the terminal performs coordinate transformation on each pixel of the screenshot of the interface displayed on the current window according to the rule for coordinate transformation, and redisplays the screenshot of each interface according to the result of the coordinate transformation.

As examples, there are two modes for implementing 3D display of software interface on a terminal.

The first mode of implementation may be called pseudo-3D. when a window is displayed (before the terminal acquires the interface dragging instruction), the terminal acquires a screenshot of each interface which needs to be displayed on the current window; and by performing 2D abscissa and ordinate calculation on each element of the screenshot of each interface under 2D coordinates of the current window, the terminal stretches or enlarges the screenshot of each interface according to a certain angle, and plots the stretched or enlarged screenshot on the current window, so as to achieve the simulated 3D visual effect. When obtaining the interface dragging instruction, the terminal records the corresponding dragging distance, calculates new 2D coordinates of each pixel of the screenshot of each interface according to a preset scaling factor (which represents a scaling relation between the dragging distance and the 2D abscissa and ordinate under the current window) and the dragging distance, and re-plots the screenshot of each interface according to the calculated new 2D coordinates.

The second mode of implementation may be called real-3D. When a window is displayed (before the terminal acquires the interface dragging instruction), the terminal acquires a screenshot of each interface which needs to be displayed on the current window; constructs (or renders) a cube under 3D coordinates (spatial coordinates on axes X, Y, Z) of the current window, and attaches the screenshot of each interface to a corresponding surface of the constructed cube as a texture image, so as to display 3D effect. When receiving the interface dragging instruction, the terminal records the corresponding dragging distance, performs spatial coordinate transformation on the cube according to the dragging distance, and redisplays a corresponding screenshot of an interface on each surface of the cube according to a result of the spatial coordinate transformation on the cube. The real-3D display may be implemented through a graphics library, such as an Open Graphics Library for Embedded Systems (OpenGL ES), which is a cross-platform, mobile-platform-based 3D graphic application tool with sophisticated functions. In some examples, the real-3D display within the terminal may be implemented by calling an Application Program Interface (API) of the OpenGL ES.

The terminal renders a cube under 3D coordinates of the current window by calling an API of the OpenGL ES, acquires a screenshot of each interface to be displayed on the current window, and attaches the screenshot of each interface to a corresponding surface of the rendered cube as a texture image to achieve 3D display effect. The subsequent spatial coordinate transformation on the cube is implemented by the terminal by calling an API of the OpenGL ES as well. When initially displayed (no dragging operation occurs), the screenshot of each interface is attached to a corresponding surface of the cube as a texture image. Accordingly, when the spatial coordinates of the cube are transformed, the change corresponding to the change in spatial coordinates of the surface of the cube will occur in spatial coordinates of the screenshot of an interface attached to that surface, and the screenshot of an interface will show a visual 3D effect.

The method for software interface display on a terminal according to an embodiment of the present disclosure is further elaborated below with reference to 3D effect in software interface display on a terminal as shown in Fig.2.

The pseudo-3D display is introduced first. When a window is displayed, the terminal acquires a screenshot of each interface to be displayed on the current window (such as screenshot A and screenshot B shown in Fig.2). Under 2D coordinates of the current window, by performing 2D abscissa and ordinate calculation on each element of the screenshot (screenshot A and screenshot B) of each interface, the terminal stretches or enlarges the screenshot of each interface according to a certain angle, and plots the stretched or enlarged screenshot on the current window, so as to achieve the simulated 3D visual effect, with the displayed effect as shown in window K1 of Fig.2. When receiving the interface dragging instruction (dragging toward the left as shown in Fig.2), the terminal records a corresponding dragging distance, calculates new 2D coordinates of each pixel of the screenshot of each interface according to a preset scaling factor and the dragging distance, and re-plots the screenshot of each interface according to the new calculated 2D coordinates, with the displayed effect as shown in window K2 of Fig.2.

Turning to the real-3D display, when a window is displayed, the terminal renders a cube under 3D coordinates of the current window by calling an API of the OpenGL ES, the terminal acquires a screenshot of each interface to be displayed on the current window (such as screenshot A, screenshot B, and screenshot C), and attaches the screenshot of each interface to a corresponding surface of the constructed cube as a texture image, so as to display 3D effect. When receiving the interface dragging instruction (dragging toward the left as shown in Fig.2), the terminal records a corresponding dragging distance, performs spatial coordinate transformation on the cube according to the dragging distance, and redisplays a corresponding screenshot of an interface on each surface of the cube according to a result of the spatial coordinate transformation on the cube. When initially displayed (no dragging operation occurs), the screenshot of each interface is attached to a corresponding surface of the cube as a texture image. Accordingly, when the spatial coordinates of the cube are transformed, the change corresponding to the change in spatial coordinates of the surface of the cube will occur in spatial coordinates of the screenshot of an interface attached to that surface, and the screenshot of an interface will show a visual 3D effect, with the displayed effect as shown in window K2, K3 of Fig.2.

An embodiment of the present disclosure provides a device for software interface display on a terminal.

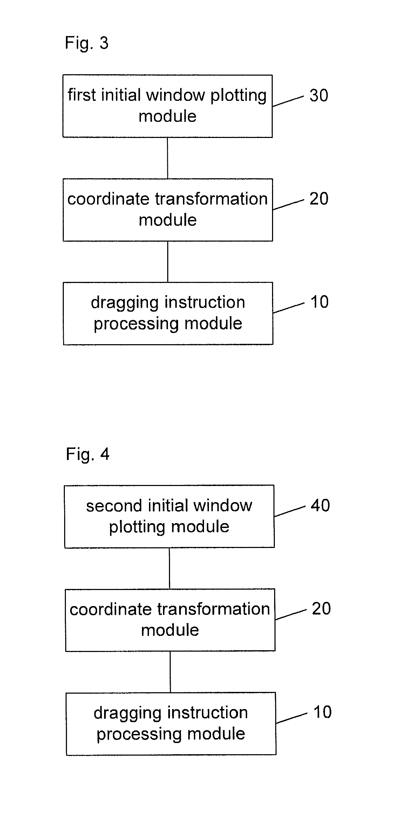

A device for implementing pseudo-3D display, as shown in Fig.3, includes a dragging instruction processing module 10, a coordinate transformation module 20, and a first initial window plotting module 30.

The first initial window plotting module 30 is configured to, when the window is displayed, acquire a screenshot of each interface to be displayed on the current window; and under 2D coordinates of the current window, stretch or enlarge the screenshot of each interface according to a certain angle through abscissa and ordinate calculation, and plot the stretched or enlarged screenshot on the current window to simulate 3D visual effect.

The dragging instruction processing module 10 is configured to acquire an interface dragging instruction, and record a dragging distance corresponding to the interface dragging instruction.

The coordinate transformation module 20 is configured to perform coordinate transformation on each pixel of a screenshot of an interface displayed on the current window according to the dragging distance and a preset rule for coordinate transformation, and redisplay the screenshot of each interface according to a result of the coordinate transformation. Specifically, the coordinate transformation module 20 is configured to calculate new 2D coordinates of each pixel of the screenshot of each interface according to a preset scaling factor and the dragging distance, and re-plot the screenshot of each interface according to the calculated new 2D coordinates. The coordinate transformation module 20 is connected to the first initial window plotting module 30. When performing 2D coordinate transformation, the coordinate transformation module 20 acquires, from the first initial window plotting module 30, 2D coordinates of the screenshot of each interface at the time the window is initially displayed, and performs 2D coordinate transformation based on the 2D coordinates of the initially displayed screenshot.

A device for implementing real-3D display, as shown in Fig.4, includes a dragging instruction processing module 10, a coordinate transformation module 20, and a second initial window plotting module 40.

The second initial window plotting module 40 is configured to, when the window is initially displayed, acquire a screenshot of each interface to be displayed on the current window; construct a cube under 3D coordinates of the current window, and attach the screenshot of each interface to a corresponding surface of the constructed cube as a texture image so as to achieve 3D display effect.

The dragging instruction processing module 10 is configured to acquire an interface dragging instruction, and record a dragging distance corresponding to the interface dragging instruction

The coordinate transformation module 20 is configured to perform coordinate transformation on each pixel of a screenshot of an interface displayed on a current window according to the dragging distance and a preset rule for coordinate transformation, and redisplay the screenshot of each interface according to a result of the coordinate transformation. Specifically, the coordinate transformation module 20 is configured to perform spatial coordinate transformation on the cube according to the dragging distance, and redisplay a corresponding screenshot of an interface on each surface of the cube according to a result of the spatial coordinate transformation on the cube. The coordinate transformation module 20 is connected to the second initial window plotting module 40. When performing spatial coordinate transformation, the coordinate transformation module 20 acquires from the second initial window plotting module 40, spatial coordinates of the cube at the time the window is initially displayed, and performs spatial coordinate transformation based on the spatial coordinates of the initially displayed cube.

When implemented in form of a software functional module and sold or used as an independent product, an integrated module of an embodiment of the present disclosure may also be stored in a computer-readable storage medium. Based on such an understanding, the essential part or a part of the technical solution of an embodiment of the present disclosure may appear in form of a software product, which software product is stored in storage media, and includes a number of instructions for allowing a computer equipment (such as a personal computer, a server, a network equipment, or the like) to execute all or part of the methods in various embodiments of the present disclosure. The storage media include various media that can store program codes such as a U disk, a mobile hard disk, a Read-Only Memory (ROM), a Random Access Memory (RAM), a magnetic disk, a CD, and the like. Thus, an embodiment of the present disclosure is not limited to any specific combination of hardware and software.

Accordingly, an embodiment of the present disclosure further provides a computer storage medium in which a computer program is stored, which computer program is for executing the method for software interface display on a terminal according to an embodiment of the present disclosure.

What described are merely preferred embodiments of the disclosure, and are not intended to limit the scope of the disclosure.

## Claims

1. A method for software interface display on a terminal, comprising:
acquiring, by a terminal, an interface dragging instruction, and recording, by the terminal, a dragging distance corresponding to the interface dragging instruction; and
performing, by the terminal, coordinate transformation on each pixel of a screenshot of an interface displayed on a current window of the terminal according to the dragging distance and a preset rule for coordinate transformation, and redisplaying, by the terminal, the screenshot of each interface in 3D effect or in simulated 3D visual effect according to a result of the coordinate transformation.

2. The method according to claim 1, further comprising: before the acquiring, by a terminal, an interface dragging instruction,
acquiring, by the terminal, a screenshot of each interface to be displayed on the current window; and under 2D coordinates of the current window, stretching or enlarging, by the terminal, the screenshot of each interface according to a certain angle through abscissa and ordinate calculation, and plotting, by the terminal, the stretched or enlarged screenshot on the current window to achieve the simulated 3D visual effect.

3. The method according to claim 2, wherein the performing, by the terminal, coordinate transformation on each pixel of a screenshot of an interface displayed on a current window according to the dragging distance and a preset rule for coordinate transformation, and redisplaying, by the terminal, the screenshot of each interface according to a result of the coordinate transformation, comprises:
calculating, by the terminal, new 2D coordinates of each pixel of the screenshot of each interface according to a preset scaling factor and the dragging distance, and re-plotting, by the terminal, the screenshot of each interface according to the calculated new 2D coordinates.

4. The method according to claim 1, further comprising: before the acquiring, by a terminal, an interface dragging instruction,
acquiring, by the terminal, a screenshot of each interface to be displayed on the current window; constructing, by the terminal, a cube under 3D coordinates of the current window, and attaching, by the terminal, the screenshot of each interface to a corresponding surface of the constructed cube as a texture image, and displaying the screenshot of each interface in 3D effect.

5. The method according to claim 4, wherein the performing, by the terminal, coordinate transformation on each pixel of a screenshot of an interface displayed on a current window according to the dragging distance and a preset rule for coordinate transformation, and redisplaying, by the terminal, the screenshot of each interface according to a result of the coordinate transformation, comprises:
performing, by the terminal, spatial coordinate transformation on the cube according to the dragging distance, and redisplaying, by the terminal, a corresponding screenshot of an interface on each surface of the cube according to a result of the spatial coordinate transformation on the cube.

6. A device for software interface display on a terminal, comprising:
a dragging instruction processing module configured to acquire an interface dragging instruction, and record a dragging distance corresponding to the interface dragging instruction; and
a coordinate transformation module configured to perform coordinate transformation on each pixel of a screenshot of an interface displayed on a current window of the terminal according to the dragging distance and a preset rule for coordinate transformation, and redisplay the screenshot of each interface in 3D effect or in simulated 3D visual effect according to a result of the coordinate transformation.

7. The device according to claim 6, further comprising a first initial window plotting module configured to, before the dragging instruction processing module acquires the interface dragging instruction, acquire a screenshot of each interface to be displayed on the current window; and under 2D coordinates of the current window, stretch or enlarge the screenshot of each interface according to a certain angle through abscissa and ordinate calculation, and plot the stretched or enlarged screenshot on the current window to achieve the simulated 3D visual effect.

8. The device according to claim 7, wherein the coordinate transformation module is configured to calculate new 2D coordinates of each pixel of the screenshot of each interface according to a preset scaling factor and the dragging distance, and re-plot the screenshot of each interface according to the calculated new 2D coordinates.

9. The device according to claim 6, further comprising a second initial window plotting module configured to, before the dragging instruction processing module acquires the interface dragging instruction, acquire a screenshot of each interface to be displayed on the current window; construct a cube under 3D coordinates of the current window, and attach the screenshot of each interface to a corresponding surface of the constructed cube as a texture image; and display the screenshot of each interface in 3D effect.

10. The device according to claim 9, wherein the coordinate transformation module is configured to perform spatial coordinate transformation on the cube according to the dragging distance, and redisplay a corresponding screenshot of an interface on each surface of the cube according to a result of the spatial coordinate transformation on the cube.

11. A computer storage medium in which computer-executable instructions are stored, the computer-executable instructions being used for executing the method according to any of claims 1 to 5.
